# EUROPEAN PATENT APPLICATION

(11) **EP 4 521 596 A1**
(43) Date of publication of application: **12.03.2025**
(21) Application number: 23827336.1
(22) Date of filing: 05.04.2023
(51) Int. Cl.: H02J 7/02, H02J 7/00

(54) **METHOD FOR CONTROLLING POWER SUPPLY AND ELECTRONIC DEVICE USING SAME**

(30) Priority: 23.06.2022 KR 20220076949; 14.07.2022 KR 20220086916
(71) Applicant: Samsung Electronics Co., Ltd., Suwon-si, Gyeonggi-do 16677 (KR)
(72) Inventor: KIM, Sangju, Suwon-si, Gyeonggi-do 16677 (KR)
(74) Representative: Appleyard Lees IP LLP
(86) International application number: PCT/KR2023/004582
(87) International publication number: WO 2023/249216

(57) **Abstract**

An electronic device according to various embodiments may include: a first port connected to a first power supply capable of supplying power to the electronic device; a second port connected to a second power supply capable of supplying power to the electronic device; a charging circuit electrically connected to the first and second ports and configured to receive power supplied through the first port and/or the second port; a first switch for controlling electric connection between the charging circuit and the first port; a second switch for controlling electric connection between the charging circuit and the second port; and a processor electrically connected to the charging circuit. The processor may acquire information indicating the magnitude of first power supplied from the first power supply and information indicating the magnitude of second power supplied from the second power supply, may compare the magnitude of first power supplied from the first power supply and the magnitude of second power supplied from the second power supply, may compare the magnitude of the second power and the magnitude of the sum of multiple power values when the magnitude of power supplied from the second power supply is changed to be equal to the magnitude of the first power on the basis of determining that the magnitude of the first power is relatively smaller than the magnitude of the second power, may control the magnitude of power supplied from the second power supply to be equal to the magnitude of the first power in response to identifying that the magnitude of the second power is relatively smaller compared with the magnitude of the sum of multiple power values, and may control the first and second switches so as to supply power to the charging circuit by using both the first and second power supplies.

## Description

### [Technical Field]

Various embodiments of the present disclosure relate to an electronic device that supports connection to an external electronic device and an operation method thereof, specifically, regarding an electronic device that is supplied with power through a universal serial bus (USB) port and an operation method thereof, to a method of configuring an electronic device that is capable of simultaneously being supplied with one or more power in the electronic device that is supplied with power through one or more USB ports.

### [Background Art]

A variety of electronic devices such as smartphones, tablet PCs, portable multimedia players (PMPs), personal digital assistants (PDAs), laptop personal computers (PCs), and wearable devices are becoming widely available. Recently, various electronic devices are provided with ports that may be connected to external electronic devices via wires, and the ports are being specified according to various standards. Among the various standards, the universal serial bus (USB) method is the most widely used.

The universal serial bus (hereinafter, USB) is an input/output standard method used to connect electronic devices to external electronic devices. Recently, with the introduction of power delivery (PD) technology in USB C-type, electronic devices may be supplied with power from a USB-connected power supply device (power delivery (PD) source). The external power supply device may supply power required to drive the electronic device through a USB connector. In addition, a power supply device that is connected to an electronic device using the USB Type-C specification may transmit or receive control signals to or from the electronic device through a configuration channel (CC) defined in the USB Type-C specification. In addition, conversely, the electronic device connected to the power supply device may transmit or receive control signals to or from the external power supply device through the configuration channel (CC) defined in the USB Type-C specification.

### [Disclosure of Invention]

### [Technical Problem]

An electronic device that includes multiple USB-C ports may be supplied with power from any USB-C port. However, the electronic device may be supplied with power by selecting only one port (selecting higher power among multiple power sources) even if multiple power sources are simultaneously connected.

For example, the electronic device may select only one port to be supplied with power when two power sources of 45W and 65W are connected to two ports, respectively. Therefore, even if the electronic device is designed to use 110W, which is the sum of two power sources, there may be a limitation that only one power source is available to be used due to the structure of the port.

In addition, when the electronic device selects multiple ports to be supplied with power, the electronic device may have the limitation of including multiple charging circuits. An electronic device that includes multiple charging circuits may have limitations in practical implementation due to controlling different values of power.

### [Solution to Problem]

There is provided an electronic device according to various embodiments. The electronic device may include a first port connected to a first power source capable of supplying power to the electronic device, a second port connected to a second power source capable of supplying power to the electronic device, a charging circuit electrically connected to the first and second ports and configured to receive power supplied through the first port and/or the second port, a first switch configured to control an electric connection between the charging circuit and the first port, a second switch configured to control an electric connection between the charging circuit and the second port, and a processor electrically connected to the charging circuit.

The processor may acquire information indicating the magnitude of first power supplied from the first power source and information indicating the magnitude of second power supplied from the second power source, compare the magnitude of first power supplied from the first power source and the magnitude of second power supplied from the second power source, compare the magnitude of the second power and the magnitude of the sum of multiple power values when the magnitude of power supplied from the second power source is changed to be equal to the magnitude of the first power on the basis of determining that the magnitude of the first power is relatively smaller than the magnitude of the second power, control the magnitude of power supplied from the second power source to be equal to the magnitude of the first power in response to identifying that the magnitude of the second power is relatively smaller compared with the magnitude of the sum of multiple power values, and control the first and second switches so as to supply power to the charging circuit using both the first and second power sources.

There is a method of controlling power supply of an electronic device, according to various embodiments. The method may include acquiring information indicating magnitude of first power supplied from a first power source and information indicating magnitude of second power supplied from a second power source, comparing the magnitude of the first power supplied from the first power source and the magnitude of the second power supplied from the second power source, comparing the magnitude of the second power and the magnitude of a sum of multiple power values when the magnitude of power supplied from the second power source is changed to be equal to the magnitude of the first power on the basis of determining that the magnitude of the first power is relatively smaller than the magnitude of the second power, controlling the magnitude of power supplied from the second power source to be equal to the magnitude of the first power in response to identifying that the magnitude of the second power is relatively smaller compared with the magnitude of the sum of multiple power values, and controlling the first and second switches so as to supply power to a charging circuit using both the first and second power sources.

### [Advantageous Effects of Invention]

According to various embodiments, the electronic device can reduce charging time by using the power of multiple power sources simultaneously in a situation where multiple power sources are connected to multiple ports.

According to various embodiments, the electronic device can include only one charging circuit, reducing costs and reducing installation space.

According to various embodiments, the electronic device can reduce configuration complexity compared to cases using multiple charging circuits, as the electronic device uses only one charging circuit.

### [Brief Description of Drawings]

FIG. 1 is a block diagram of an electronic device in a network environment according to various embodiments.
FIG. 2 is a block diagram illustrating a power management module and a battery according to various embodiments.
FIG. 3 is a schematic configuration view of an electronic device, according to various embodiments.
FIG. 4 illustrates a block diagram of a configuration of an electronic device, according to various embodiments.
FIG. 5 illustrates a flowchart of a method of controlling power supply of an electronic device, according to various embodiments.

### [Mode for the Invention]

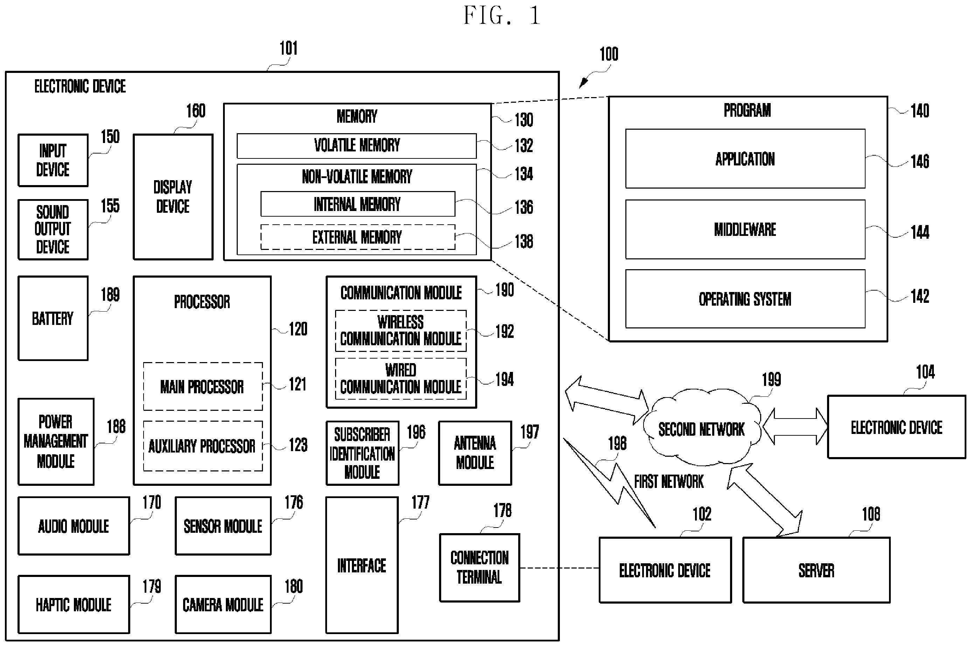

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

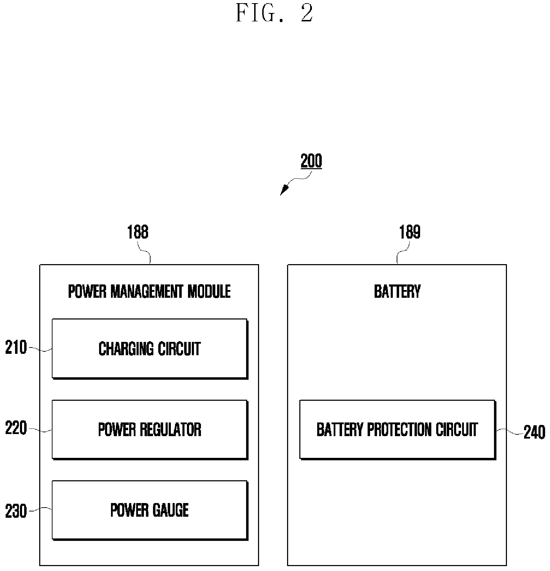

FIG. 2 is a block diagram 200 for a power management module 188 and a battery 189, according to various embodiments. With reference to FIG. 2, the power management module 188 may include a charging circuit 210, a power regulator 220, or a power gauge 230. The charging circuit 210 may charge the battery 189 using power supplied from an external power source to the electronic device 101. According to an embodiment, the charging circuit 210 may select a charging method (e.g., normal charging or quick charging) on the basis of at least some of a type of external power source (e.g., power source adapter, USB, or wireless charging), magnitude of power that is available to be supplied from the external power source (e.g., approximately 20 watts or more), or attributes of the battery 189, and charge the battery 189 using the selected charging method. The external power source may be connected to the electronic device 101, for example, either via a wired connection through a connection terminal 178, or via a wireless connection through an antenna module 197.

The power regulator 220, for example, may generate multiple powers having different voltage or different current levels by regulating the voltage level or current level of the power supplied from the external power source or the battery 189. The power regulator 220 may regulate the power from the external power source or the battery 189 to a voltage or current level suitable for each constituent element of some constituent elements among the constituent elements included in the electronic device 101. According to an embodiment, the power regulator 220 may be implemented in the form of a low drop out (LDO) regulator or a switching regulator. The power gauge 230 may measure usage state information on the battery 189 (e.g., capacity, number of charge and discharge cycles, voltage, or temperature of the battery 189).

The power management module 188 may determine charging state information (e.g., lifespan, over-voltage, under-voltage, over-current, overcharge, over-discharge, overheating, short-circuit, or swelling) related to charging of the battery 189 using, for example, the charging circuit 210, the power regulator 220, or the power gauge 230, on the basis of the measured usage state information at least in part. The power management module 188 may determine whether the battery 189 is normal or abnormal on the basis of the determined charging state information at least in part. When the state of the battery 189 is determined to be abnormal, the power management module 188 may regulate the charging to the battery 189 (e.g., by reducing the charging current or voltage, or stopping the charging). According to an embodiment, at least some of the functions of the power management module 188 may be performed by an external control device (e.g., processor 120).

According to an embodiment, the battery 189 may include a battery protection circuit (protection circuit module (PCM)) 240. The battery protection circuit 240 may perform one or more of a variety of functions (e.g., pre-cutoff function) to prevent performance degradation or damage to the battery 189. The battery protection circuit 240 may be additionally or alternatively configured as at least part of a battery management system (BMS) that may perform various functions, including balancing cells, measuring capacity of the battery, measuring the number of charge and discharge cycles, measuring temperature, or measuring voltage.

According to an embodiment, at least part of the usage state information or the charging state information on the battery 189 may be measured using a corresponding sensor (e.g., temperature sensor) of a sensor module 276, the power gauge 230, or the power management module 188. According to an embodiment, the corresponding sensor (e.g., temperature sensor) of the sensor module 176 may be included as part of the battery protection circuit 140, or may be disposed near the battery 189 as a separate device.

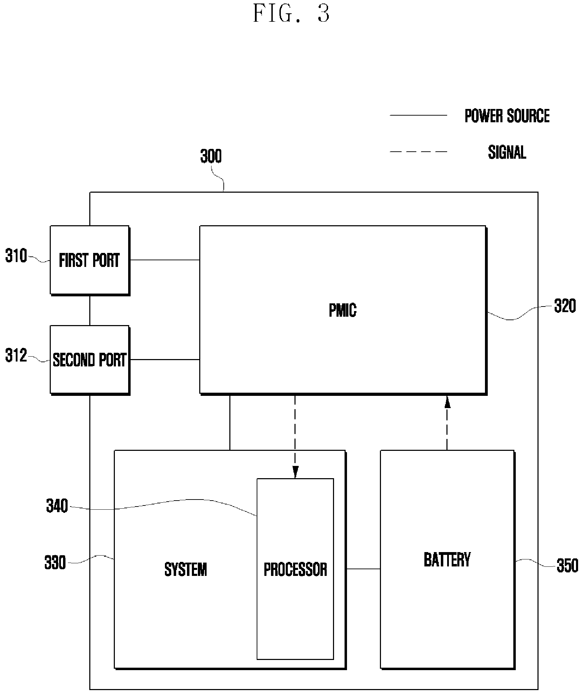

FIG. 3 is a schematic configuration view of an electronic device, according to various embodiments.

Specifically, FIG. 3 briefly illustrates configurations required in the electronic device in FIGS. 1 and 2 for describing the present invention, although other configurations may be included in addition to those illustrated, and some configurations may be omitted. With reference to FIG. 3, the electronic device (e.g., electronic device 101 in FIG. 1) may include a system 330 that includes a first port 310 (e.g., connection terminal 178 in FIG. 1), a second port 312, an interface power management IC (IF PMIC) 320 (e.g., power management module 188 in FIG. 1), a battery 350 (e.g., battery 189 in FIG. 1), and a processor 340. In FIG. 3, the system 330 may include, in addition to the processor 340, a communication processor (CP), a display (e.g., display module 160 in FIG. 1), an antenna (e.g., antenna module 197 in FIG. 1), a communication module (e.g., communication module 190 in FIG. 1), and the like, and any configuration that is supplied with power as an internal configuration of the electronic device 101 may be included in the system 330. That is, in FIG. 3, the internal configuration of the electronic device 101 that is supplied with power may be collectively referred to as the system 330.

According to various embodiments, the first port 310 or the second port 312 may be an interface for connecting an external electronic device to the electronic device 300. The first port 310 and/or the second port 312 are a physical interface, which may be a port that supports a specific specification (e.g., universal serial bus (USB)). The first port 310 and/or the second port 312 may be an interface that provides various data and/or power (or voltage, current) between an external electronic device capable of supplying power (e.g., charger) and the electronic device 300. For example, the first port 310 and/or the second port 312 may be a universal serial bus (USB) port or an adapter port. The number of connection terminals may not be limited to two.

According to various embodiments, the PMIC 320 may be supplied with power from an external electronic device (e.g., external battery, adapter) that is connected through at least one of the first port 310 and/or the second port 312 and capable of supplying power, and may provide the supplied power to the system 330. Alternatively, the PMIC 320 may provide the system 330 with power provided by the battery 350.

According to various embodiments, the PMIC 320 may identify whether the battery 350 is attached using sensed information. The PMIC 320 may generate an event (e.g., direct power mode) when the battery 350 is attached or detached and transmit the event to the processor 340. The PMIC 320 may store information related to this in a specific variable (e.g., sysfs). The sysfs may refer to a memory-based file system that includes information on kernel data structures. The processor 340 may determine whether the battery 350 is to be attached or detached on the basis of a value of a specific variable, as necessary.

According to various embodiments, the PMIC 320 may transmit information on whether the battery 350 is attached to the processor 340 so that the performance of the electronic device 101 is not limited when the battery 350 is attached in a state in which an external source is connected.

According to various embodiments, when an external power source is connected to at least one of the first port 310 or the second port 312, the PMIC 320 may sense the voltage of the external source to identify whether the external source is capable of supplying power to the system 330. The PMIC 320 may supply power to the system 330 using the battery 350 when the sensed voltage of the external source is lower than a preset voltage.

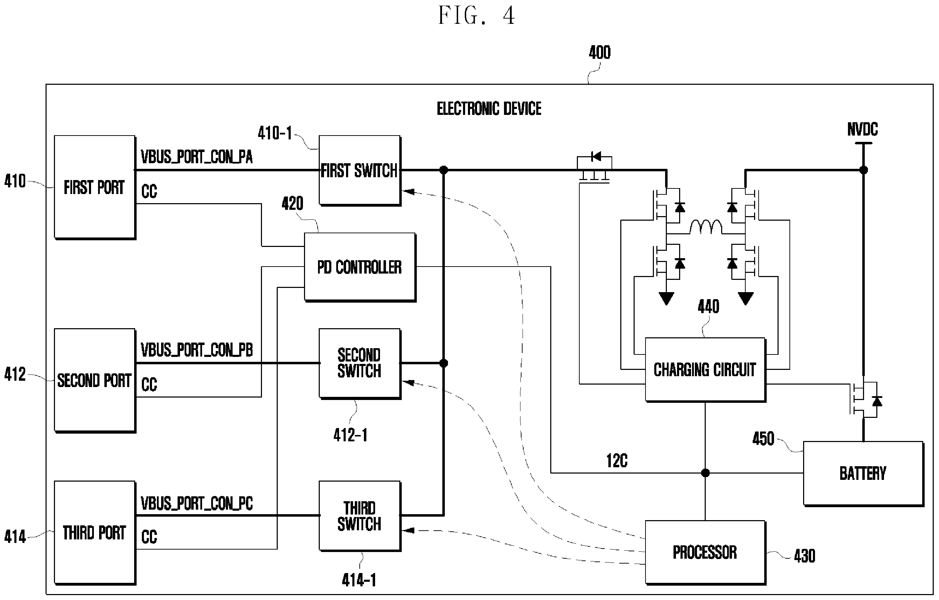

FIG. 4 illustrates a block diagram of a configuration of an electronic device, according to various embodiments.

According to various embodiments, an electronic device 400 may include a first port 410, a first switch 410-1, a second port 412, a second switch 412-1, a third port 414, a third switch 414-1, a PD controller 420, a processor 430, a charging circuit 440, and a battery 450.

According to an embodiment, the electronic device 400 including at least one USB-C port may, under the control of the processor 430, supply power to the system using at least one switch. The electronic device 400 may prevent reverse power supply to another port that does not have a power source connection. Even if the voltage of one power source is relatively higher than the voltage of another power source in a situation where multiple power sources are simultaneously connected, the electronic device 400 may control such that power is supplied while no current flows in the reverse direction.

According to an embodiment, the electronic device 400 may perform a function of protecting a circuit from reverse current (reverse current protection function) using at least one switch. The processor 430 may acquire information indicating at least one voltage and current that may be output by the power source connected using the PD controller 420. The processor 430 may determine whether at least one switch operates on the basis of the acquired information. The operation of at least one switch may refer to generating an electrical connection between the power source and the electronic device 400 so that the connected power source supplies power to the electronic device 400. The non-operation of at least one switch may refer to cutting off an electrical connection between the power source and the electronic device 400 so that the connected power source does not supply power to the electronic device 400. For example, the processor 430 may control at least one switch not to operate in situations where using one power source may allow for greater power usage than unifying and using multiple power sources together. The processor 430 may control at least one switch not to operate, thereby cutting off the electric connection between at least one power source and the electronic device 400. The processor 430 may control at least one switch not to operate when it is difficult to supply power using all multiple power sources due to system constraints (e.g., temperature increase).

According to an embodiment, the processor 430 may operate at least one switch in situations where using one power source allows for relatively greater power usage than unifying the power from multiple power sources for combined use. The processor 430 may operate at least one switch to generate an electric connection between at least one power source and the electronic device 400. The processor 430 may operate at least one switch to control such that power is supplied to the electronic device 400 using multiple power sources.

The electronic device 400 may receive information on the power source, including the magnitude, voltage, and current of the power supplied from an external electronic device connected to each port. Alternatively, the electronic device 400 may request information on the power source, including the magnitude, voltage, and current of the power supplied by an external electronic device connected to each port, from the external electronic device. The electronic device 400 may limit the maximum magnitude of current that may flow in the charging circuit 440 on the basis of information on the power source.

According to an embodiment, the electronic device 400 may calculate the power of each power source using the processor 430 when the voltages of the power sources connected to each port differ. For example, the power source connected to the first port 410 may have 45 W (15 V/3 A). The power source connected to the second port 412 may have 65 W (20 V/3.25 A). The electronic device 400 may change the power source connected to the second port 412 to 45 W (15 V/3 A) so as to be equal to the current and voltage supported by the first port 410. The electronic device 400 may change the power source connected to the second port 412 to 45 W (15 V/3 A) and then perform charging using all connected power sources (e.g., first port 410 and second port 412). When using all connected power sources (e.g., first port 410 and second port 412), the sum of the total power to be charged may be 90 W (15 V/6 A). The electronic device 400 may change the power of the power source connected to the second port 412 to 45W (15 V/3 A) on the basis of identifying that the sum of the total power to be charged is greater than the power of the greatest power source among the connected power sources (e.g., first port 410 and second port 412), which is 65 W. The electronic device 400 may change the power of the power source connected to the second port 412 to 45W (15 V/3 A) and perform charging using all connected power sources (power sources of first port 410 and second port 412) to charge the battery 450 at 90W (15 V/6 A).

According to an embodiment, the processor 430 may compare the magnitude of first power supplied from a first power source with the magnitude of second power supplied from a second power source. Hereinafter, the description proceeds under the assumption that the magnitude of the first power from the first power source is relatively lower when compared with the magnitude of the second power from the second power source. The processor 430 may adjust multiple power sources (e.g., first power source or second power source) to have the same power magnitude as the magnitude of the first power (current and voltage). The processor 430 may change the power of multiple power sources to supply the changed power to the charging circuit 440 when the sum of adjusted multiple power values is greater than the power of the second power source, which has the greatest value. The processor 430 may control the switch to perform charging using both the first power source and the second power source. The first power source and the second power source may supply power to the charging circuit 440.

The processor 430 may adjust multiple power sources (e.g., first power source or second power source) to have the same power magnitude. The processor 430 may supply power to the charging circuit 440 using only the second power source, without changing the power of multiple power sources, when the sum of adjusted multiple power values is less than the power of the second power source, which has the greatest value. The processor 430 may control the switch to perform charging using only the second power source. The second power source may supply power to the charging circuit 440.

For example, the power source connected to the first port 410 may have 45 W (15 V/3 A), and the power source connected to the second port 412 may have 100 W (20 V/5 A). The electronic device 400 may not change the power of the power source connected to the second port 412 to 45 W (15 V/3 A) on the basis of identifying that the sum of total power becomes 90 W (15 V/6 A) and is less than the power of the greatest power source, which is 100 W (20 V/5 A), when the power source connected to the second port 412 is changed to 45 W (15 V/3 A) and combined so that the current and voltage of the connected power sources are equal. The electronic device 400 may charge the battery 450 using only the power source connected to the second port 412. The electronic device 400 may not use the power source connected to the first port 410 to charge the battery 450. The processor 430 may control the switch to release the electrical connection between the power source connected to the first port 410 and the electronic device 400, or to maintain the electrical connection but not supply power.

According to an embodiment, the electronic device 400 may control the charging circuit 440 to use the maximum power of a USB-C power source using the PD controller 420. The PD controller 420 may transmit information indicating the power required in the system to the USB-C power source using the communication module (e.g., communication module 190 in FIG. 1), and supply power to the charging circuit 440.

According to an embodiment, the electronic device 400 may control current flowing to the charging circuit 440 and the battery 450 using at least one of multiple switches (e.g., first switch 410-1, second switch 412-1, and third switch 414-1). For example, the power source may be connected to the first port 410. In this case, the electronic device 400 may operate the switch (e.g., first switch 410-1) directly connected to the port (e.g., first port 410) to which the power source is connected to control such that the power source and battery 450 remain electrically connected. The electronic device 400 may stop the operation of the switch (e.g., second switch 412-1) directly connected to the port (e.g., second port 412) to which the power source is not connected. The electronic device 400 may prevent current from flowing in the reverse direction within the electronic device 400 using multiple switches. The forward direction may refer to a direction in which current flows from a power source connected to the electronic device 400 to the battery 450 and charging circuit 440. The reverse direction may refer to a direction in which current flows from the battery 450 and charging circuit 440 to the port.

According to an embodiment, the electronic device 400 may supply power using all multiple power sources connected to multiple ports (e.g., first port 410, second port 412, and third port 414). The number of multiple ports may not be limited by the embodiment described in FIG. 4.

According to an embodiment, the electronic device 400 may control the charging circuit 440 so that the magnitude of the current input to the charging circuit 440 is equal to or less than (or less than) a designated value on the basis of a power source having the same power being connected. The electronic device 400 may acquire information indicating power of a connected power source using the processor 430. The electronic device 400 may control the charging circuit 440 so that the magnitude of the current input to the charging circuit 440 is less than a designated value on the basis of information indicating the power of the connected power source.

For example, the electronic device 400 may control such that in a situation where a power source of 65 W (20 V/3.25 A) is connected to the first port 410 and a power source of 65 W (20 V/3.25 A) is connected to the second port 412, power may be supplied to the charging circuit 440 to be less than 6.5 A, which is the sum of the two 3.25 A. The electronic device 400 may, in a situation where a power source of 65 W (20 V/3.25 A) is additionally connected to the third port 414, acquire information indicating that the power source has been additionally connected using the processor 430. The electronic device 400 may control such that power may be supplied to the charging circuit 440 to be less than 9.75 A, which is the sum of the three 3.25 A, on the basis of information indicating that the power source has been additionally connected. The electronic device 400 may acquire information indicating that part of the power source has been removed using the processor 430. The electronic device 400 may control the power supplied to the charging circuit 440 on the basis of information indicating that part of the power source has been removed.

According to an embodiment, the electronic device 400 may further include a power delivery integrated circuit (PDIC). The electronic device 400 may establish a communication connection with at least one of the first power source or the second power source connected to the electronic device using the PDIC and may receive information including the type or charging capacity of the first power source or the second power source.

According to an embodiment, the electronic device 400 may guide charging information on the battery on the display (e.g., display module 160 in FIG. 1) in response to a user input. The charging information on the battery (e.g., battery 189 in FIG. 1) may include at least one of a charging state, temperature, charging current, or charging voltage of the battery.

According to an embodiment, the electronic device 400 may cut off the power supply to the charging circuit 440 in response to identifying that the charging state of the battery 189 is in a fully charged state.

According to an embodiment, the electronic device 400 may distribute power to the processor 430 and the charging circuit 440 using a power management integrated circuit (PMIC).

According to various embodiments, the electronic device 400 may acquire information indicating the power of connected power sources using the processor 430 in a situation where multiple power sources with different power are connected. For example, case 1 in Table 1 may refer to a situation where the electronic device 400 has a power source of 45 W (15 V/3 A) connected to the first port 410 and a power source of 65 W (20 V/3.25 A) connected to the second port 412. The electronic device 400 may acquire information indicating power of a connected power source using the processor 430. The electronic device 400 may identify that, when changing the power of the second port 412 to 45 W (15 V/3 A) so that the magnitudes of current and voltage supported by both power sources are equal and combining the power values, the result is 90 W (15 V/6 A), the electronic device has a relatively greater value compared to the maximum value of 65 W (20 V/3.25 A) when using one power source. The electronic device 400 may supply 90 W (15 V/6 A) of power to the charging circuit 440 by changing the power of both power sources to 45 W (15 V/3 A) and combining the power values.

In case 2 in Table 1, the electronic device 400 may acquire information indicating power of a connected power source using the processor 430. The electronic device 400 may identify that, when changing the power of multiple power sources to 45 W (15 V/3 A) so that the current and voltage of the multiple power sources are equal and supplying power to the charging circuit 440 using all multiple power sources, the magnitude of the supplied power becomes 90 W (15 V/6 A). The electronic device 400 may identify that the magnitude of the supplied power is up to 100 W (20 V/5 A) when supplying power using one power source. The electronic device 400 may determine that, when supplying power using only one power source, a relatively greater magnitude of power is supplied compared to converting the magnitudes of multiple power sources to be equal and supplying power using multiple power sources. In case 2, the electronic device 400 may maintain the power of the power source indicating 100W (20V/5A) and supply 100 W (20 V/5 A) of power to the charging circuit 440 using only the power source indicating 100 W (20 V/5 A).

In case 3 in Table 1, the electronic device 400 may acquire information indicating power of a connected power source using the processor 430. The electronic device 400 may supply power to the charging circuit 440 using all multiple power sources in response to identifying that the power (current and voltage) of both power sources is equal. The electronic device 400 may convert the magnitudes of both power sources to have the same current and voltage when the power of both power sources is equal, but the current and voltage differ. The electronic device 400 may compare the sum of the power of the converted power sources with the value of the power before conversion to determine whether to use all multiple power sources or one power source.

**[Table 1]**

| Capacity | First power source (45W) | Second power source (65W) | Third power source (100W) |
|---|---|---|---|
| Voltage and current supplied from power source | 5V/3A | 5V/3A | 5V/3A |
| | 9V/3A | 9V/3A | 9V/3A |
| | 15V/3A | 15V/3A | 15V/3A |
| | | 20V/3.25A | 20V/5A |
| Case1) 45W + 65W | Changing power of second power source (65W) to 45W (15V/3A) and setting supply power of first and second power sources to be equal (operating at 4590W) | | |
| Case2) 45W + 100W | Since 45W + 45W = 90W < 100W, power is supplied from 100W of one power source without combining power sources. (Operating at 100W) | | |
| Case3) 65W + 65W | Supplying power by adding up power of multiple power sources (power add-up) (Operating at 65W + 65W = 130W) | | |

According to an embodiment, the electronic device 400 may cut off the connection of at least one of the connected multiple power sources on the basis of the internal temperature rising above a predetermined level. For example, in case 1, the electronic device 400 may cut off the connection with the power source indicating 45 W on the basis of the temperature of the processor 430 rising above a predetermined level. The electronic device 400 may supply power to the charging circuit 440 using only the power source indicating 65 W.

For example, in case 1, the electronic device 400 may cut off the connection with the power source indicating 65 W on the basis of the temperature of the processor 430 rising above a predetermined level. The electronic device 400 may supply power to the charging circuit 440 using only the power source indicating 45 W.

According to an embodiment, the electronic device 400 may limit the current input to the charging circuit 440 using the processor 430 when the sum of the power of input power sources exceeds maximum allowable capacity of the system. The electronic device 400 may control the total amount of supplied power by limiting the current input to the charging circuit 440. For example, in a situation where the maximum allowable power within the system is 100 W and there are two input power sources (65 W + 65 W = 130 W), the electronic device 400 may limit the current input to the charging circuit 440 to control such that the total amount of supplied power from both power sources does not exceed 100 W.

According to an embodiment, the PD controller 420 may maintain the voltage supplied to the charging circuit 440 constant and control the current supplied to the charging circuit 440 so that the current does not exceed a predetermined level.

According to a comparative embodiment, in a situation where a 45 W (15 V/3 A) power source is connected to the first port 410 and a 65 W (20 V/3.25 A) power source is connected to the second port 412, the electronic device has a limitation in that only one power source may be used due to a difference in voltage between the power sources connected to both ports. The electronic device according to the comparative embodiment may have difficulty fully utilizing the power, even in a situation where the connected multiple power sources have a total power of 110 W and the battery is capable of being supplied with a power of 110W, due to the connection structure of the multiple power sources connected to the ports.

According to a comparative embodiment, the electronic device may need to include multiple charging circuits to use multiple power sources with different voltages in a situation where a 45W (15V/3A) power source is connected to the first port 410 and a 65W (20V/3.25A) power source is connected to the second port 412. According to a comparative embodiment, the electronic device may include multiple charging circuits, which may increase the installation space and lead to increased costs. According to a comparative embodiment, the electronic device, by including multiple charging circuits, may consume relatively more system resources to control multiple charging circuits compared to one charging circuit.

The electronic device 400 according to various embodiments of the present document may supply relatively greater power to charge the battery 450 using multiple power sources with different voltages, while using only one charging circuit 440. The electronic device 400 may prevent current from flowing in the reverse direction by using multiple switches while using multiple power sources.

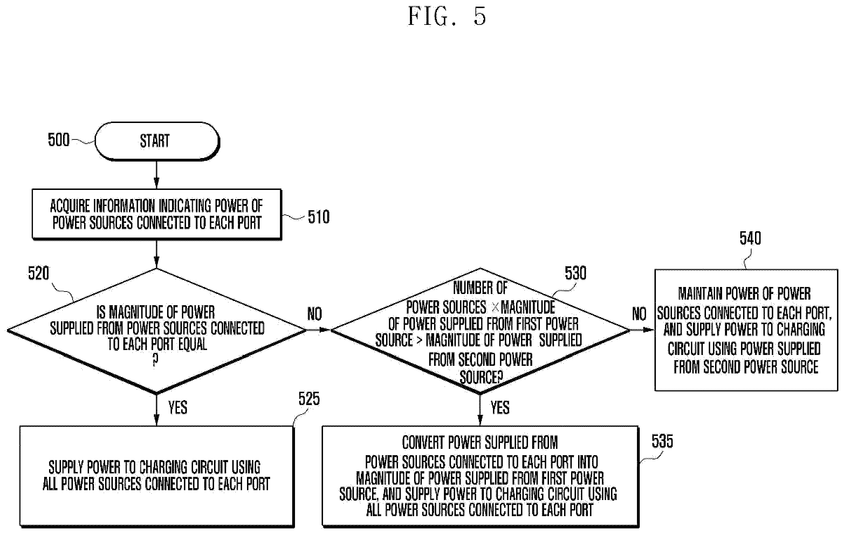

FIG. 5 illustrates a flowchart of a method of controlling power supply of an electronic device, according to various embodiments.

The operations described through FIG. 5 may be implemented on the basis of instructions that may be stored in a computer recording medium or memory (e.g., memory 130 in FIG. 1). An illustrated method 500 may be executed by the electronic device (e.g., electronic device 400 in FIG. 4) described above through FIGS. 1 to 4, the technical features of which have been described above will be omitted hereinafter.

At operation 510, the electronic device 400 may acquire information indicating the power, voltage, and current of the power sources connected to each port under the control of the processor (e.g., processor 340 in FIG. 3). For example, the electronic device 400 may acquire information indicating that the power source connected to the first port (e.g., first port 410 in FIG. 4) has 45 W (15 V, 3 A) and that the power source connected to the second port (e.g., second port 412 in FIG. 4) has 65 W (20 V, 3.5 A). The number of ports and power sources included in the electronic device 400 is not limited to the embodiment of operation 510.

At operation 520, the electronic device 400 may identify whether the power supplied from multiple power sources is equal on the basis of acquiring information indicating the power of power source. At operation 525, the electronic device 400 may supply power to the charging circuit (e.g., charging circuit 440 in FIG. 4) using all power sources connected to each port, on the basis of the power supplied from multiple power sources being equal. The electronic device 400 may convert the magnitudes of both power sources to have the same current and voltage when the power of both power sources is equal, but the current and voltage differ. The electronic device 400 may compare the sum of the power of the converted power sources with the value of the power before conversion to determine whether to use all multiple power sources or one power source.

At operation 530, the electronic device 400 may determine whether to supply power using all multiple power sources or to supply power using only one power source with the maximum power, on the basis of the power supplied from the multiple power sources not being equal. The electronic device 400 may acquire information indicating the power of the power sources connected to each port using the processor 430 in a situation where two power sources are connected to the electronic device 400 through each port.

The electronic device 400 may compare the magnitude of first power supplied from the first power source with the magnitude of second power supplied from the second power source. The electronic device 400 may adjust multiple power sources (e.g., first power source or second power source) to have the same power magnitude as the first power (current and voltage) on the basis of determining that the magnitude of the first power is relatively smaller than the magnitude of the second power. The electronic device 400 may be supplied with power to the charging circuit 440 using all multiple power sources when the sum of the adjusted multiple power values is greater than the power of the second power source, which has the greatest value. At operation 535, the electronic device 400 may change the power of power sources connected to each port to be the same as the value (current and voltage) indicating the power of the first power source and supply power to the charging circuit 440 using multiple power sources. The electronic device 400 may operate both the first switch (e.g., first switch 410-1 in FIG. 4) and the second switch (e.g., second switch 412-1 in FIG. 4) to supply power to the charging circuit 440 using both the first power source and the second power source. The first switch 410-1 may be positioned between the charging circuit 440 and the first port (e.g., first port 410 in FIG. 4) to control an electrical connection, and the second switch 412-1 may be positioned between the charging circuit 440 and the second port (e.g., second port 412 in FIG. 4) to control an electrical connection.

For example, the power source connected to the first port 410 may supply power with a magnitude of 45 W (15 V/3 A), and the power source connected to the second port 412 may supply power with a magnitude of 65W (20 V/3.25 A). The electronic device 400 may change the power to 45 W (15 V/3 A) so that the current and voltage of the connected power sources are equal, and supply power to the charging circuit 440 using multiple power sources. When supplying power to the charging circuit 440 using multiple power sources, the total power supplied may have a magnitude of 90 W (15 V/6 A). The electronic device 400 may determine that a relatively greater amount of power may be supplied when supplying power to the charging circuit 440 using multiple power sources, compared with supplying power to the charging circuit 440 using one power source. The electronic device 400 may change the magnitude of the power supplied from the connected power sources to 45 W (15 V/3 A) in order to use multiple power sources. The electronic device 400 may supply 90 W (15 V/6 A) of power to the charging circuit 440 using multiple power sources, which is relatively greater than the existing 65 W (20 V/3.25 A).

The electronic device 400 may adjust multiple power sources (e.g., first power source or second power source) to have the same power magnitude as the first power (current and voltage) on the basis of determining that the magnitude of the first power is relatively smaller than the magnitude of the second power. The electronic device 400 may supply power to the charging circuit 440 using only the second power source without changing the power of the multiple power sources when the sum of the adjusted multiple power values is less than the magnitude of the power of the second power source, which has the greatest value. At operation 540, the electronic device 400 may stop the operation of the first switch 410-1 and operate the second switch 412-1 to supply power to the charging circuit 440 using only the second power source.

For example, the power source connected to the first port 410 may supply power with a magnitude of 45 W (15 V/3 A), and the power source connected to the second port 412 may supply power with a magnitude of 100W (20 V/5 A). The electronic device 400 may determine that, when changing the supplied power magnitude to 45 W (15 V/3 A) so that the current and voltage of the connected power sources are equal, and supplying power using multiple power source, a magnitude of 90 W (15 V/6 A) power may be supplied. The electronic device 400 may not change the power magnitude supplied from the connected power sources to 45 W (15 V/3 A) on the basis of the power sources connected to the second port 412 being capable of supplying power with a relatively greater magnitude of 100 W (20 V/5 A). The electronic device 400 may supply power to the charging circuit 440 using only the power source connected to the second port 412.

According to an embodiment, the electronic device 400 may provide information to the user indicating which port is being used for charging when an external power source is connected to multiple ports. For example, the electronic device 400 may display information indicating that power is being supplied through the first port 410, on the display (e.g., display module 160 in FIG. 1) on the basis of identifying that power is supplied to the charging circuit 440 from the first port 410. Alternatively, the electronic device 400 may display at least one of a user interface (UI), light, icon, text, or image within a predetermined distance from the first port 410, on the basis of identifying that power is supplied to the charging circuit 440 from the first port 410.

According to an embodiment, the electronic device 400 may provide guidance to the user indicating which port is being used for charging when an external power source is connected to multiple ports. For example, the electronic device 400 may display guidance on the display (e.g., display module 160 in FIG. 1) indicating that a cable connected to the second port 412 may be removed, on the basis of identifying that power is being supplied from the first port 410 to the charging circuit 440 and that the second port 412 is not in use. The electronic device 400 may display on the display 160 at least one of whether charging is currently in progress, the current charging mode (e.g., normal mode, fast mode, ultra-fast mode), the time required for a full charge, or the current battery charge percentage.

According to an embodiment, the processor may compare the magnitude of the sum of multiple power values with the magnitude of the second power when the magnitude of power supplied from the second power source is changed to be equal to the magnitude of the first power, and control the first switch and the second switch to supply power to the charging circuit using only the second power source in response to identifying that the magnitude of the second power is relatively larger compared with the magnitude of the sum of multiple power values.

According to an embodiment, the processor may control the first switch and the second switch to supply power to the charging circuit using both the first power source and the second power source on the basis of the magnitude of the first power being equal to the magnitude of the second power.

According to an embodiment, a switch of the first switch and the second switch that corresponds to a power source determined to supply power to the charging circuit may be controlled to be in a connected state, a remaining switch that does not correspond to the determined power source may be controlled to be in a non-connected state.

According to an embodiment, the electronic device may further include a power management integrated circuit (PMIC), and the PMIC may distribute power to the processor and the charging circuit.

According to an embodiment, the electronic device may further include a power delivery integrated circuit (PDIC), and the PDIC may establish a communication connection with at least one of the first power source or the second power source connected to the electronic device, and receive information including a type or charging capacity of the first power source or the second power source.

A method of controlling power supply of an electronic device, according to various embodiments, may include acquiring information indicating magnitude of first power supplied from a first power source and information indicating magnitude of second power supplied from a second power source, comparing the magnitude of the first power supplied from the first power source and the magnitude of the second power supplied from the second power source, comparing the magnitude of the second power and the magnitude of a sum of multiple power values when the magnitude of power supplied from the second power source is changed to be equal to the magnitude of the first power on the basis of determining that the magnitude of the first power is relatively smaller than the magnitude of the second power, controlling the magnitude of power supplied from the second power source to be equal to the magnitude of the first power in response to identifying that the magnitude of the second power is relatively smaller compared with the magnitude of the sum of multiple power values, and controlling the first and second switches so as to supply power to a charging circuit using both the first and second power sources.

According to an embodiment, the method may further include comparing, on the basis of the number of external power supply devices connected to the electronic device, the magnitude of the sum of multiple power values with the magnitude of the second power when the magnitude of power supplied from the second power source is changed to be equal to the magnitude of the first power, and controlling the first switch and the second switch to supply power to the charging circuit using only the second power source in response to identifying that the magnitude of the second power is relatively larger compared with the magnitude of the sum of multiple power values.

According to an embodiment, the method may include controlling the first switch and the second switch to supply power to the charging circuit using both the first power source and the second power source on the basis of the magnitude of the first power being equal to the magnitude of the second power.

The embodiments of the present document disclosed in the present specification and illustrated in the drawings are provided as particular examples for easily explaining the technical contents according to the embodiment of the present document and helping understand the embodiment of the present document, but not intended to limit the scope of the embodiment of the present document. Accordingly, the scope of the various embodiments of the present document should be interpreted as including all alterations or modifications derived from the technical spirit of the various embodiments of the present document in addition to the disclosed embodiments.

## Claims

1. An electronic device, comprising:
a first port connected to a first power source capable of supplying power to the electronic device;
a second port connected to a second power source capable of supplying power to the electronic device;
a charging circuit electrically connected to the first and second ports and configured to receive power supplied through the first port and/or the second port;
a first switch configured to control an electric connection between the charging circuit and the first port;
a second switch configured to control an electric connection between the charging circuit and the second port; and
a processor electrically connected to the charging circuit,
wherein the processor:
acquires information indicating magnitude of first power supplied from the first power source and information indicating magnitude of second power supplied from the second power source;
compares the magnitude of the first power supplied from the first power source and the magnitude of the second power supplied from the second power source;
compares the magnitude of the second power and the magnitude of a sum of multiple power values when the magnitude of power supplied from the second power source is changed to be equal to the magnitude of the first power on the basis of determining that the magnitude of the first power is relatively smaller than the magnitude of the second power;
controls the magnitude of power supplied from the second power source to be equal to the magnitude of the first power in response to identifying that the magnitude of the second power is relatively smaller compared with the magnitude of the sum of multiple power values; and
controls the first and second switches so as to supply power to the charging circuit using both the first and second power sources.

2. The electronic device of claim 1, wherein the processor compares the magnitude of the sum of multiple power values with the magnitude of the second power when the magnitude of power supplied from the second power source is changed to be equal to the magnitude of the first power, and controls the first switch and the second switch to supply power to the charging circuit using only the second power source in response to identifying that the magnitude of the second power is relatively greater compared with the magnitude of the sum of multiple power values.

3. The electronic device of claim 1, wherein the processor controls the first switch and the second switch to supply power to the charging circuit using both the first power source and the second power source on the basis of the magnitude of the first power being equal to the magnitude of the second power.

4. The electronic device of claim 1, wherein the processor controls a switch of the first switch and the second switch that corresponds to a power source determined to supply power to the charging circuit to be in a connected state, and controls a remaining switch that does not correspond to the determined power source to be in a non-connected state.

5. The electronic device of claim 1, further comprising:
a power management integrated circuit (PMIC), the PMIC distributing power to the processor and the charging circuit.

6. The electronic device of claim 1, further comprising:
a power delivery integrated circuit (PDIC),
wherein the PDIC establishes a communication connection with at least one of the first power source or the second power source connected to the electronic device, and receives information including a type or charging capacity of the first power source or the second power source.

7. An electronic device, comprising:
a first port connected to a first power source capable of supplying power to the electronic device;
a second port connected to a second power source capable of supplying power to the electronic device;
a charging circuit electrically connected to the first and second ports and configured to receive power supplied through the first port and/or the second port;
a first switch positioned between the charging circuit and the first port and configured to control an electric connection;
a second switch positioned between the charging circuit and the second port and configured to control an electric connection;
a processor electrically connected to the charging circuit; and
a memory operatively connected to the processor,
wherein the memory, when executed, stores instructions to allow the processor to:
acquire information indicating magnitude of first power supplied from the first power source and information indicating magnitude of second power supplied from the second power source;
compare the magnitude of the first power supplied from the first power source and the magnitude of the second power supplied from the second power source;
compare the magnitude of the second power and the magnitude of a sum of multiple power values when the magnitude of power supplied from the second power source is changed to be equal to the magnitude of the first power on the basis of determining that the magnitude of the first power is relatively smaller than the magnitude of the second power;
control the magnitude of power supplied from the second power source to be equal to the magnitude of the first power in response to identifying that the magnitude of the second power is relatively smaller compared with the magnitude of the sum of multiple power values; and
control the first and second switches so as to supply power to the charging circuit using both the first and second power sources.

8. The electronic device of claim 7, wherein the instructions allows the processor to compare the magnitude of the sum of multiple power values with the magnitude of the second power when the magnitude of power supplied from the second power source is changed to be equal to the magnitude of the first power, and control the first switch and the second switch to supply power to the charging circuit using only the second power source in response to identifying that the magnitude of the second power is relatively greater compared with the magnitude of the sum of multiple power values.

9. The electronic device of claim 7, wherein the instructions allow the processor to control the first switch and the second switch to supply power to the charging circuit using both the first power source and the second power source on the basis of the magnitude of the first power being equal to the magnitude of the second power.

10. The electronic device of claim 7, wherein the instructions allows the processor to control a switch of the first switch and the second switch that corresponds to a power source determined to supply power to the charging circuit to be in a connected state, and controls a remaining switch that does not correspond to the determined power source to be in a non-connected state.

11. The electronic device of claim 7, further comprising:
a power management integrated circuit (PMIC), the PMIC distributing power to the processor and the charging circuit.

12. The electronic device of claim 7, further comprising:
a power delivery integrated circuit (PDIC),
wherein the PDIC establishes a communication connection with at least one of the first power source or the second power source connected to the electronic device, and receives information including a type or charging capacity of the first power source or the second power source.

13. A method of controlling power supply of an electronic device, the method comprising:
acquiring information indicating magnitude of first power supplied from a first power source and information indicating magnitude of second power supplied from a second power source;
comparing the magnitude of the first power supplied from the first power source and the magnitude of the second power supplied from the second power source;
comparing the magnitude of the second power and the magnitude of a sum of multiple power values when the magnitude of power supplied from the second power source is changed to be equal to the magnitude of the first power on the basis of determining that the magnitude of the first power is relatively smaller than the magnitude of the second power;
controlling the magnitude of power supplied from the second power source to be equal to the magnitude of the first power in response to identifying that the magnitude of the second power is relatively smaller compared with the magnitude of the sum of multiple power values; and
controlling the first and second switches so as to supply power to a charging circuit using both the first and second power sources,
wherein the first switch controls an electric connection between the charging circuit and the first port, and a second switch controls an electric connection between the charging circuit and the second port.

14. The method of claim 13, further comprising:
comparing, on the basis of the number of external power supply devices connected to the electronic device, the magnitude of the sum of multiple power values with the magnitude of the second power when the magnitude of power supplied from the second power source is changed to be equal to the magnitude of the first power; and
controlling the first switch and the second switch to supply power to the charging circuit using only the second power source in response to identifying that the magnitude of the second power is relatively greater compared with the magnitude of the sum of multiple power values.

15. The method of claim 13, further comprising:
controlling the first switch and the second switch to supply power to the charging circuit using both the first power source and the second power source on the basis of the magnitude of the first power being equal to the magnitude of the second power.
